# EUROPEAN PATENT SPECIFICATION

(11) **EP 4 213 352 B1**
(45) Date of publication and mention of the grant of the patent: **10.12.2025**
(21) Application number: 21908241.9
(22) Date of filing: 07.01.2021
(51) Int. Cl.: H02K 7/06, H02K 7/116, F16H 37/12, A61G 7/018

(54) **LINEAR DRIVER FOR ELECTRIC FURNITURE, AND ELECTRIC FURNITURE**
LINEARANTRIEB FÜR ELEKTROMÖBEL UND ELEKTROMÖBEL
MOTEUR LINÉAIRE POUR MEUBLE ÉLECTRIQUE ET MEUBLE ÉLECTRIQUE

(30) Priority: 21.12.2020 CN 202011519244; 21.12.2020 CN 202023098469 U
(43) Date of publication of application: 19.07.2023
(73) Proprietor: DewertOkin Technology Group Co., Ltd., Jiaxing City, Zhejiang Province 314011 (CN)
(72) Inventor: LV, Zuochao, Jiaxing, Zhejiang 314011 (CN); LI, Long, Jiaxing, Zhejiang 314011 (CN); MEI, Weifeng, Jiaxing, Zhejiang 314011 (CN); CHEN, Chunqi, Jiaxing, Zhejiang 314011 (CN); YE, Yiting, Jiaxing, Zhejiang 314011 (CN)
(74) Representative: Grünecker Patent- und Rechtsanwälte PartG mbB
(86) International application number: PCT/CN2021/070573
(87) International publication number: WO 2022/134222

(56) References cited:
- EP-A2- 1 679 223
- CN-A- 106 799 976
- CN-A- 106 799 976
- CN-U- 207 364 215
- CN-U- 210 318 408
- CN-U- 210 404 975
- DE-U1- 202019 103 343
- JP-A- 2009 179 203
- US-A1- 2010 013 285
- US-B2- 9 139 110

## Description

### TECHNICAL FIELD

The present invention relates to the field of furniture, for example, a linear driver for electric furniture and electric furniture.

### BACKGROUND

For furniture such as tables and chairs to have folding and lifting functions, a driver is usually provided. In the related art, a driver commonly used in the furniture industry is usually a linear driver. There are mainly two types of linear drivers. One type of linear driver includes a lead screw, a worm wheel sleeved around the lead screw, and a worm meshing with the worm wheel, where the worm wheel is in threaded connection with the lead screw. The rotation of the worm drives the rotation of the worm wheel to move the lead screw relative to the worm wheel in the axial direction.

However, during the rotation of the worm wheel, once a relative tilt occurs between the screw lead and the worm wheel, the power source that drives the worm to rotate suffocates.

CN 106 799 976 A discloses a transmission device for an automobile seat adjustor.

US 9 139 110 B2 discloses a spindle drive for longitudinally adjusting a motor vehicle seat.

### SUMMARY

The present invention provides a linear driver for electric furniture and electric furniture to guide the movement of a lead screw relative to a worm wheel to ensure the coaxiality of the lead screw and the worm wheel.

The present invention is set out in the appended set of claims.

### BRIEF DESCRIPTION OF DRAWINGS

In the following, a brief description will be given of the drawings required for use in the description of the present invention embodiment. Obviously, the drawings in the following description are only some embodiments of the present invention. For those of ordinary skill in the art, other drawings can be obtained from the contents of embodiments of the present invention and from these drawings without inventive effort.
FIG. 1 is a structure view of a linear driver for electric furniture according to embodiment one of the present invention.
FIG. 2 is an exploded view of the linear driver for electric furniture according to embodiment one of the present invention.
FIG. 3 is a sectional view of the linear driver for electric furniture according to embodiment one of the present invention.
FIG. 4 is a sectional view of a worm wheel according to embodiment one of the present invention.
FIG. 5 is an enlarged view of part A of FIG. 3.
FIG. 6 is an enlarged view of part B of FIG. 3.
FIG. 7 is a view of a second housing according to embodiment one of the present invention.
FIG. 8 is a structure view of a brake member according to embodiment one of the present invention.
FIG. 9 is an exploded view of a linear driver for electric furniture according to embodiment two of the present invention.
FIG. 10 is a sectional view of the linear driver for electric furniture according to embodiment two of the present invention.
FIG. 11 is an enlarged view of part C of FIG. 10.
FIG. 12 is an exploded view of a linear driver for electric furniture according to example three outside the subject-matter of the claims but useful for understanding the invention.

### Reference list

- 11: motor
- 12: worm
- 13: worm wheel
- 131: smooth edge portion
- 132: annular groove
- 14: lead screw
- 21: first housing
- 22: second housing
- 23: U-shaped portion
- 24: second positioning member
- 25: motor front end cap
- 250: through hole
- 251: limit step
- 252: boss
- 3: guide structure
- 31: third positioning member
- 32: guide hole
- 321: arc slot
- 41: bearing
- 42: shaft sleeve
- 421: first positioning member
- 43: gasket
- 44: elastic element
- 5: first limit member
- 6: wire
- 7: brake member
- 71: notch
- 72: cut
- 73: friction surface

### DETAILED DESCRIPTION

The solutions of the present invention are further described hereinafter through embodiments in conjunction with drawings. It is to be understood that the embodiments set forth below are merely intended to illustrate the present invention. It is to be further noted that for convenience of description, only some but not all structures related to the embodiments of the present invention are shown in accompanying drawings. It should also be noted that, for ease of description, only part and not all of the present invention are shown in drawings.

### Embodiment one

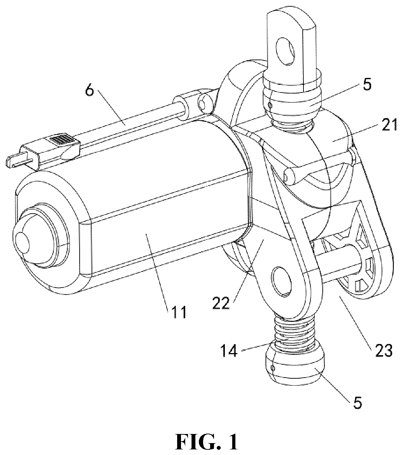

As shown in FIGS. 1 to 3, this embodiment provides a linear driver for electric furniture. The linear driver includes a housing, a worm 12 with one end extending into the housing, a worm wheel 13 disposed in the housing and meshing with the worm 12, and a lead screw 14. The lead screw 14 penetrates through the worm wheel 13 and is in threaded connection with the worm wheel 13. At least one end of the lead screw 14 extends out of the housing to connect a movable portion of the electric furniture. In an embodiment, the worm wheel 13 is configured to restrict the movement of the lead screw 14 relative to the worm wheel 13 along the axial direction of the lead screw 14.

The worm 12 rotates to drive the rotation of the worm wheel 13 which meshes with the worm 12. In this manner, the lead screw 14 drives the mounting bracket of the electric furniture to operate.

In an embodiment, the lead screw 14 is connected to the fixing portion of the electric furniture, and the lead screw 14 can be fixed relative to the ground so that when the worm 12 rotates, the housing, the worm wheel 13, and the motor 11 which is connected to the worm 12 can move relative to the ground.

In an embodiment, the housing is connected to the fixing portion of the electric furniture, and the housing can be fixed relative to the ground so that when the worm 12 rotates, the screw lead 14 can move relative to the ground.

In an embodiment, the worm wheel 13 is configured to rotate relative to the housing, but the worm wheel 13 cannot move relative to the housing along the axial direction of the worm wheel 13 or can move only slightly relative to the housing along the axial direction of the worm wheel 13. That is, the worm wheel 13 is restricted from moving relative to the housing along the axial direction of the worm wheel 13.

The electric furniture may be an electric sofa, an electric table, or an electric bed. The linear driver is usually directly secured to the fixing portion of the electric furniture. In an embodiment, a U-shaped portion 23 is formed on the housing and configured to be connected to, for example, the fixing portion of an electric sofa frame or an electric bed frame.

To connect the lead screw 14 to the movable portion of the electric furniture, in this embodiment, one end of the lead screw 14 extends out of the housing and is connected to a connecting portion fixed relative the lead screw 14. The connecting portion is configured to connect the movable portion of the electric furniture. The connecting portion and the lead screw 14 may be integrally formed, or the connecting portion may be separate from and secured to the lead screw 14.

In other embodiments, two ends of the lead screw 14 may extend out of the housing and are each connected to a connecting portion fixed relative to the lead screw 14.

In another embodiment, a connecting hole may be formed at least one end of the lead screw 14 extending out of the housing. The lead screw 14 is connected to the movable portion of the electric furniture through the connecting hole. Optionally, an oil-containing shaft sleeve or a plastic-made bearing may be disposed in the connecting hole depending on the actual requirements.

The preceding linear driver for electric furniture also includes a power source. The power source in this embodiment is the motor 11. The output shaft of the motor 11 and the worm 12 are integrally formed, or are connected as a whole. The motor 11 is connected to a wire 6 for connecting a power supply and a control switch. The power supply is electrically connected to the motor 11 through the wire 6 for supplying power to the motor 11. The control switch is electrically connected to the motor 11 through the wire 6 and controls the motor 11 to rotate forward or reversely through the control switch. In other embodiments, the power source may also be an electric machine.

In an embodiment, to define the travel of the lead screw 14, the preceding linear driver for electric furniture also includes a limit assembly for limiting the extreme position to which the lead screw 14 is movable. In an embodiment, the limit assembly includes a first limit member 5 and a second limit member. Two ends of the lead screw 14 extend out of the housing and are each connected to a first limit member 5. The first limit member 5 is sleeved around the lead screw 14, and an elastic pin shaft penetrates through the first limit member 5 and the lead screw 14 to fix the first limit member 5 relative to the lead screw 14. The housing is provided with a second limit member. The second limit member is a limit switch electrically connected to the motor 11. Optionally, the limit switch is a microswitch. During the movement of the lead screw 14 relative to the housing, once the second limit switch contacts the first limit member, the motor will stop rotating, maintaining the lead screw 14 in the current state. In other embodiments, the first limit member may be a limit switch.

To improve the stability of the lead screw 14 when moving relative to the worm wheel 13, at least one end of the worm wheel 13 is provided with a guide structure 3. The guide structure 3 is sleeved around the lead screw 14 and is in clearance fit with the lead screw 14. The guide structure 3 is fixed relative to the worm wheel 13. Optionally, two ends of the worm wheel 13 are each provided with a guide structure 3 to improve the stability of the lead screw 14 when moving relative to the worm wheel 13. The size of the clearance between the guide structure 3 and the lead screw 14 in clearance fit can be determined by multiple repeated tests.

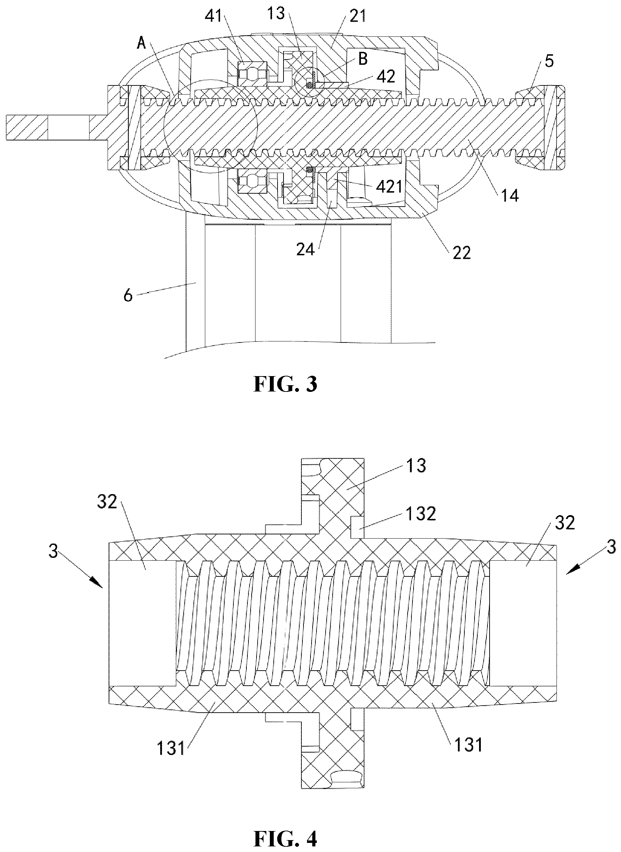

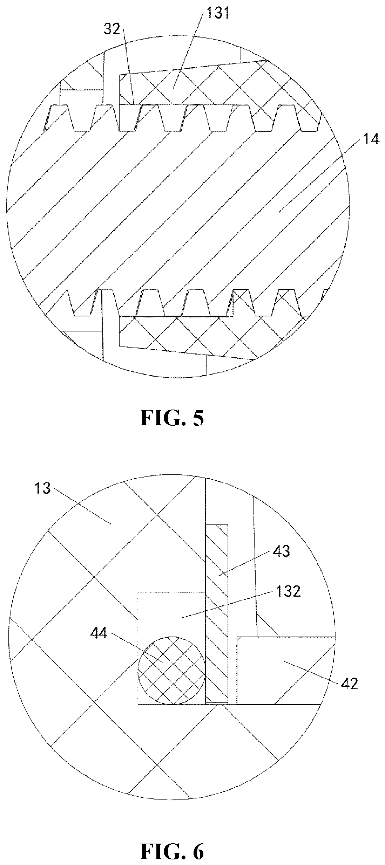

In this embodiment, the guide structure 3 and the worm wheel 13 are integrally formed. In an embodiment, as shown in FIGS. 3 to 5, two ends of the worm wheel 13 in the axial direction are each provided with a smooth edge portions 131 integrally formed with the worm wheel 13. The smooth edge portion 131 is provided with a guide hole 32. The guide hole 32 is a smooth hole. The lead screw 14 penetrates through the guide hole 32. The inner wall of the guide hole 32 and the lead screw 14 are in clearance fit to form the guide structure 3. The movement of the lead screw 14 relative to the worm wheel 13 is guided by the guide structure 3 so that the coaxiality of the lead screw 14 and the worm wheel 13 is improved, avoiding the tilt of the lead screw 14 relative to the worm wheel 13 which causes locked-rotor of the motor 11.

Optionally, in this embodiment, the inner wall of the guide hole 32 is provided with a first oil-storage slot for storing lubricating oil to lubricate the lead screw 14 so as to ensure smooth rotation of the lead screw 14.

In an embodiment, to facilitate the installation and replacement of the worm wheel 13, the housing includes a first housing 21 and a second housing 22. The first housing 21 and the second housing 22 are detachably connected. In this embodiment, the first housing 21 and the second housing 22 are connected to each other by multiple screws arranged in a circumferential direction. In other embodiments, the first housing 21 and the second housing 22 may also be connected to each other by snap fit or threaded connection.

In an embodiment, to limit the worm wheel 13 in the axial direction and support the worm wheel 13, at least one smooth edge portion 131 is provided with a supporting member, and the smooth edge portion 131 can be rotated relative to the housing through the supporting member. In this embodiment, each smooth edge portion 131 is provided with a supporting member. One of the supporting members is a bearing 41, and another of the supporting members is a shaft sleeve 42, improving the stability of the worm wheel 13. In other embodiments, a supporting member may be disposed on only one smooth edge portion 131, and the supporting member may be a bearing 41 or a shaft sleeve 42. To limit the worm wheel 13 in the axial direction, the end face of the smooth edge portion 131 with no supporting member sleeved around abuts against the inner wall of the housing.

In an embodiment, a bearing 41 is sleeved around one smooth edge portion 131. The inner ring of the bearing 41 is fixed relative to the smooth edge portion 131, and the outer ring of the bearing 41 is fixed relative to the housing. A shaft sleeve 42 is sleeved around another smooth edge portion 131. The shaft sleeve 42 is fixed relative to the housing. Optionally, the bearing 41 uses a ball bearing. The inner ring of the bearing 41 may be fixed relative to the smooth edge portion 131 in interference fit.

Since the outer ring of the bearing 41 is fixed relative to the housing and the inner ring and the outer ring of the bearing 41 cannot move in the axial direction, the bearing 41 indirectly functions to limit the worm wheel 13 in the axial direction. The worm wheel 13 is supported and limited in the axial direction by the bearing 41 and the shaft sleeve 42, increasing the stability of the lead screw 14.

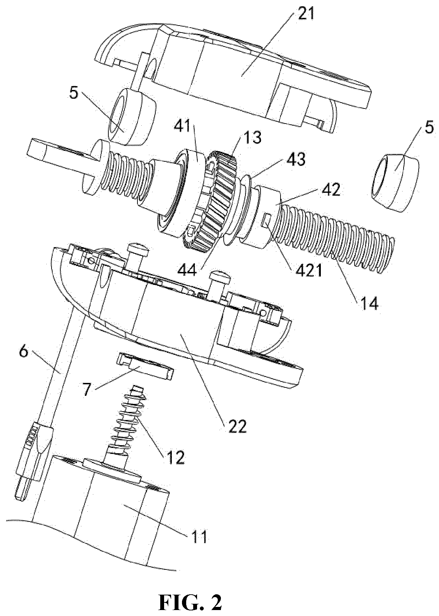

In an embodiment, as shown in FIGS. 2, 3, and 6, the outer peripheral wall of the shaft sleeve 42 is provided with a first positioning member 421, the inner wall of the housing is provided with a second positioning member 24, and the first positioning member 421 and the second positioning member 24 are inserted together to limit the movement of the shaft sleeve 42 in the axial direction and the circumferential direction. In this embodiment, the first positioning member 421 is a protrusion, and the second positioning member 24 is a groove. Optionally, multiple first positioning members 421 are provided. The first positioning members 421 are uniformly distributed along the circumferential direction of the outer wall of the shaft sleeve 42. The first positioning members 421 are in one-to-one correspondence with second positioning members 24. In other embodiments, the first positioning member 421 may be a groove, and the second positioning member 24 may be a protrusion.

In an embodiment, to avoid movement of the worm wheel 13 in the axial direction during rotation, in this embodiment, the shaft sleeve 42 is fixed relative to the housing. An elastic element 44 is sandwiched between the shaft sleeve 42 and the worm wheel 13. In an embodiment, an annular groove 132 is disposed on the side of the worm wheel 13 facing the shaft sleeve 42. The elastic member 44 is mounted in the annular groove 132. A gasket 43 is disposed between the worm wheel 13 and the shaft sleeve 42. The outer diameter of the gasket 43 is larger than the maximum outer diameter of the annular groove 132 so that the gasket 43 can abut against the axial end face of the worm wheel 13. The gasket 43 is pressed by the shaft sleeve 42 so that the elastic member 44 is pressed into the annular groove 132, and the vibration is damped by the deformation of the elastic member 44, thereby preventing the worm wheel 13 from moving in the axial direction. Optionally, the gasket 43 is a corrugated gasket, and the elastic member 44 is a rubber member.

In other embodiments, two shaft sleeves 42 may be used to support the worm wheel 13 and to limit the worm wheel 13 in the axial direction. One shaft sleeve 42 is sleeved around each smooth edge portion 131, and the shaft sleeve 42 is fixed relative to the housing inner wall. In an embodiment, a gasket 43 is disposed between each shaft sleeve 42 and the axial end face of the worm wheel 13 to avoid that the worm wheel 13 jams on the shaft sleeve 42 when being assembled. One axial end face of the worm wheel 13 is provided with the annular groove 132. The elastic member 44 is mounted in the annular groove 132. The elastic member 44 abuts against the gasket 43. One side of the worm wheel 13 is limited by the shaft sleeve 42, and the other side of the worm wheel 13 is limited by the elastic member 44 in cooperation with the shaft sleeve 42, thereby preventing the worm wheel 13 from moving in the axial direction during rotation.

In other embodiments, two bearings 41 may be used to support the worm wheel 13 and to limit the worm wheel 13 in the axial direction. In an embodiment, one bearing 41 may be sleeved around each smooth edge portion 131 at two ends of the worm wheel 13. The inner ring of a bearing 41 is fixed relative to the smooth edge portion 131, and the outer ring of the bearing 41 is fixed relative to the housing. Both the two bearings 41 can limit the worm wheel 13 in the axial direction, thereby preventing the worm wheel 13 from moving in the axial direction during rotation.

In an embodiment, the inner wall of the preceding shaft sleeve 42 is provided with a second oil-storage slot for storing lubricating oil to lubricate the smooth edge portion 131 to ensure smooth rotation of the worm wheel 13.

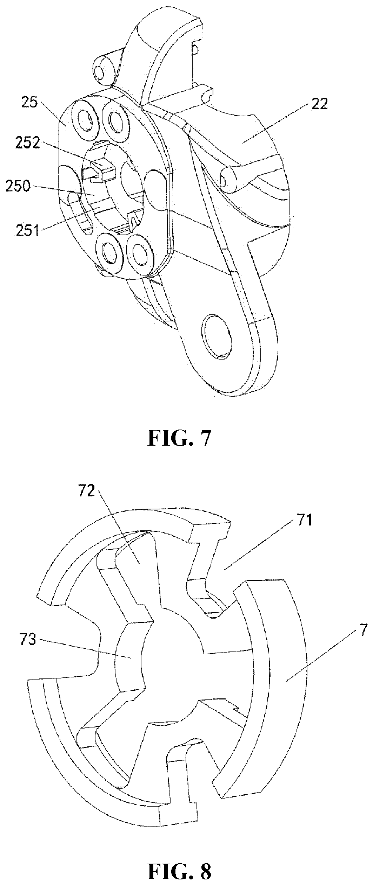

In an embodiment, as shown in FIGS. 7 and 8, the preceding linear driver for electric furniture also includes a brake member 7 connected to the housing and sleeved around the worm 12. The brake member 7 is elastically deformable to provide the worm 12 with a braking force opposite to the rotational direction of the worm 12. In an embodiment, the outer side of the second housing 22 is connected to a motor front end cap 25. The motor front end cap 25 is provided with a through hole 250, and the inner wall of the through hole 250 is provided with multiple limit steps 251 arranged in the circumferential direction. Each of at least one limit step 251 is provided with a boss 252. The outer peripheral wall of the brake member 7 is provided with multiple notches 71. The notch 71 and the boss 252 are in one-to-one correspondence and are inserted together so that the brake member 7 is secured to the motor front end cap 25 in a non-rotatable manner.

The end outer wall of the worm 12 facing the motor 11 is a cylindrical surface with no worm teeth. The free end of the worm 12 extends through the brake member 7 and extends into the second housing 22. The brake member 7 is provided with multiple cuts 72, and the cuts 72 and the notches 71 are alternately arranged along the circumferential direction of the brake member 7. The provision of the cuts 72 and the notches 71 provides space for elastic deformation of the brake member 7. The surface on which the brake member 7 contacts the worm 12 forms a friction surface 73. The friction surface 73 cooperates with the cylindrical surface with no worm teeth on the worm 12 during rotation of the worm 12 to provide a braking force for the worm 12. The structure of the brake member 7 and how the brake member 7 brakes the worm 12 may adopt techniques in the related art, and will not be described in detail.

To avoid damage to the surface of the worm 12 caused by the brake member 7 during rotation of the worm 12, the material hardness of the brake member 7 is required to be less than the material hardness of the worm 12.

The present embodiment also provides electric furniture including the preceding linear driver for electric furniture, which can improve the coaxiality of the lead screw 14 and the worm wheel 13, and effectively avoiding the tilt of the lead screw 14 relative to the worm wheel 13 which causes locked-rotor of the motor 11, thereby ensuring the normal use of the folding or lifting functions of the electric furniture.

### Embodiment two

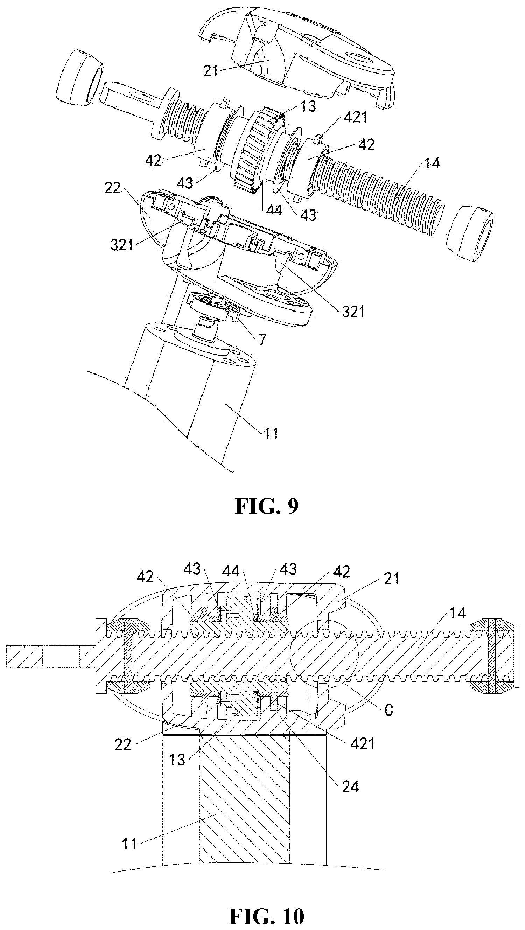

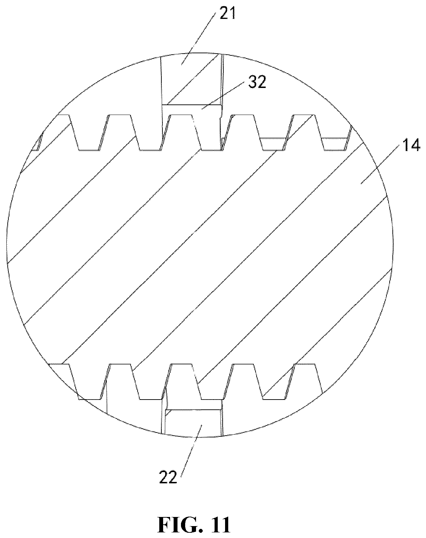

As shown in FIGS. 9 to 11, this embodiment differs from embodiment one in that the structure of the guide structure 3 is different. In this embodiment, the guide structure 3 is disposed on the housing. In an embodiment, each of the first housing 21 and the second housing 22 is provided with an arc slot 321. The arc slot 321 on the first housing 21 and the arc slot 321 on the second housing 22 are in one-to-one correspondence and are opened towards each other. The arc slots 321 opened towards each other form a guide hole 32, and the inner wall of the guide hole 32 is in clearance fit with the lead screw 14 to form the guide structure 3. The inner wall of the guide hole 32 is in clearance fit with the lead screw 14 so that the lead screw 14 is guided and will not tilt, thereby ensuring the stability of the movement and rotation of the lead screw 14 relative to the housing. In this embodiment, two guide holes 32 are provided. The two guide holes 32 are respectively disposed at two ends of the worm wheel 13 in the axial direction. The two ends of the lead screw 14 penetrate out of the housing from the two guide holes 32.

Optionally, the inner wall of the guide hole 32 is provided with a first oil-storage slot for storing lubricating oil to lubricate the lead screw 14, thereby ensuring smooth rotation of the lead screw 14 relative to the guide hole 32.

To limit the worm wheel 13, two ends of the worm wheel 13 are each provided with a smooth edge portion 131, and each smooth edge portion 131 is provided with a supporting member. The supporting member is a shaft sleeve 42 fixed relative to the housing. In an embodiment, the outer wall of the shaft sleeve 42 is provided with a first positioning member 421. The inner wall of the housing is provided with a second positioning member 24. The first positioning member 421 and the second positioning member 24 are inserted together to limit the movement of the shaft sleeve 42 in the axial direction and the circumferential direction. In this embodiment, the first positioning member 421 is a protrusion, and the second positioning member 24 is a groove. Optionally, multiple first positioning members 421 are provided. The first positioning members 421 are uniformly distributed along the circumferential direction of the outer wall of the shaft sleeve 42, and the first positioning members 421 are in one-to-one correspondence to the second positioning members 24. In other embodiments, the first positioning member 421 may be a groove, and the second positioning member 24 may be a protrusion.

In an embodiment, to avoid that the shaft sleeve 42 jams on the worm wheel 13 when being assembled, a gasket 43 is disposed between each shaft sleeve 42 and the axial end face of the worm wheel 13 facing the each shaft sleeve 42. Optionally, the gasket 43 is a corrugated gasket.

In an embodiment, to avoid movement of the worm wheel 13 in the axial direction during rotation, this embodiment provides an elastic element 44 between one shaft sleeve 42 and the end face of the worm wheel 13 facing the one shaft sleeve 42. In an embodiment, one axial end face of the worm wheel 13 is provided with an annular groove 132. The elastic member 44 is mounted in the annular groove 132. The gasket 43 abuts against the elastic member 44, and the shaft sleeve 42 abuts against the gasket 43 so that the vibration is damped by the deformation of the elastic member 44, thereby preventing the worm wheel 13 from moving in the axial direction.

Optionally, the inner wall of the shaft sleeve 42 is provided with a second oil-storage slot for storing lubricating oil to lubricate the outer wall of the smooth edge portion 131 to ensure smooth rotation of the worm wheel 13.

In other embodiments, one bearing 41 may be sleeved around each smooth edge portion 131. The inner ring of a bearing 41 is fixed relative to the worm wheel 13, and the outer ring of the bearing 41 is fixed relative to the housing to replace the shaft sleeve 42.

In other embodiments, a bearing 41 may be sleeved around one smooth edge portion 131, where the inner ring of the bearing 41 is fixed relative to the worm wheel 13, and the outer ring of the bearing 41 is fixed relative to the housing. A shaft sleeve 42 fixed relative to the housing is sleeved around another smooth edge portion 131, where a gasket 43 is disposed between a shaft sleeve 42 and the axial end face of the worm wheel 13 facing the shaft sleeve 42 to avoid that the shaft sleeve 42 jams on the worm wheel 13 when being assembled. One axial end face of the worm wheel 13 is provided with an annular groove 132. The elastic member 44 is mounted in the annular groove 132. The gasket 43 abuts against the elastic member 44, and the shaft sleeve 42 abuts against the gasket 43 so that the vibration is damped by the deformation of the elastic member 44, thereby preventing the worm wheel 13 from moving in the axial direction.

### Example three

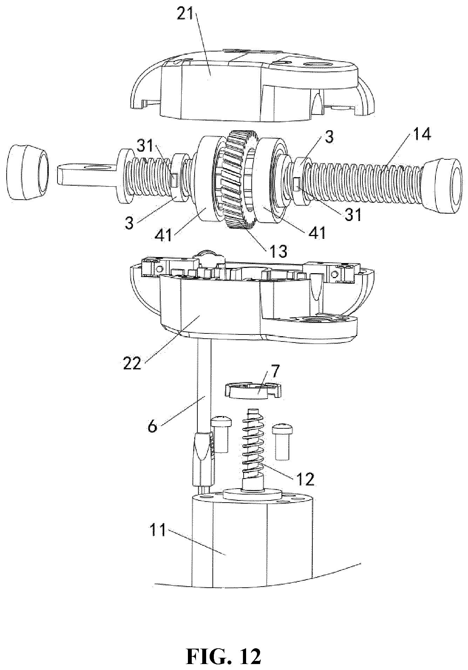

This example is outside the subject-matter of the claims but useful for understanding the invention. As shown in FIG. 12, this example differs from other embodiments in that the structure of the guide structure 3 is different. In this example, the guide structure 3 is separate from the housing and the worm wheel 13 and is fixed relative to the housing. In an example, the guide structure 3 is a sleeve. The sleeve is sleeved around the lead screw 14, and the inner wall of the sleeve is in clearance fit with the lead screw 14. The outer wall of the sleeve is provided with a third positioning member 31, and the inner wall of the housing is provided with a fourth positioning member. The third positioning member 31 and the fourth positioning member are inserted together to limit the movement of the sleeve in the axial direction and the circumferential direction. In this example, the third positioning member 31 is a protrusion, and the fourth positioning member is groove.

Optionally, multiple third positioning members 31 are provided. The third positioning members 31 are uniformly distributed along the circumferential direction of the sleeve, and a fourth positioning member is in one-to-one correspondence with a third positioning member 31. In other examples, the third positioning member 31 may be a groove, and the fourth positioning member may be a protrusion.

Optionally, the inner wall of the sleeve is provided with a first oil-storage slot to lubricate the lead screw 14 to ensure smooth rotation of the lead screw 14.

In an example, two ends in the axial direction of the worm wheel 13 are each provided with a smooth edge portion 131 connected thereto, and each smooth edge portion 131 is provided with a supporting member. The supporting member is a bearing 41. The inner ring of the bearing 41 is fixed relative to the smooth edge portion 131, and the outer ring of the bearing 41 is fixed relative to the housing. The worm wheel 13 is supported and limited in the axial direction by two bearings 41. The two bearings 41 are used to limit the worm wheel 13 in the axial direction to prevent the worm wheel 13 from moving in the axial direction during rotation.

In other examples, a shaft sleeve 42 fixed relative to the housing may be sleeved around each smooth edge portion 131, or a shaft sleeve 42 fixed relative to the housing may be sleeved around one smooth edge portion 131, and a bearing 41 is sleeved around another smooth edge portion 131. The inner ring of the bearing 41 is fixed relative to the smooth edge portion 131, and the outer ring of the bearing 41 is fixed relative to the housing. The two ways of supporting the worm wheel 13 and limiting the worm wheel 13 in the axial direction are the same as the previously described and are not repeated here.

### Embodiment four

In this embodiment, two guide structures 3 are provided. The two guide structures 3 are disposed at the two ends of the worm wheel 13. The present embodiment differs from the present other embodiments in that one of the guide structures 3 uses the guide hole 32 in clearance fit with the lead screw 14 and disposed on the smooth edge portion 131 in embodiment one, and the other guide structure 3 uses the guide hole 32 in clearance fit with the lead screw 14 and disposed on the housing in embodiment two.

In other embodiments, one of the guide structures 3 may use the guide hole 32 in clearance fit with the lead screw 14 and disposed on the smooth edge portion 131 in embodiment one, and the other guide structure 3 may use the sleeve in clearance fit with the lead screw 14 in example three.

In another embodiment, one of the guide structures 3 may use the guide hole 32 in clearance fit with the lead screw 14 and disposed on the housing in embodiment two, and the other guide structure 3 may use the sleeve in clearance fit with the lead screw 14 in example three.

In the linear driver for electric furniture provided by the present invention, a guide structure is disposed on at least one end of the worm wheel. The guide structure is fixed relative to the housing or the worm wheel. The guide structure is sleeved around the lead screw and is in clearance fit with the lead screw. The movement of the lead screw to the worm wheel is guided by the guide structure so that the coaxiality of the lead screw and the worm wheel is improved, preventing the lead screw from tilting relative to the worm wheel and then influencing the normal movement of the lead screw.

The electric furniture provided by the present invention includes the preceding linear driver for electric furniture so that the coaxiality of the worm wheel and the lead screw can be effectively improved, thereby ensuring the normal use of the folding or lifting functions of the electric furniture.

In the description of the present invention, it is to be noted that the orientations or position relations indicated by terms such as "center", "above", "below", "left", "right", "vertical", "horizontal", "inside", "outside", and the like are based on orientations or position relations shown in the drawings. These orientations or position relations are intended only to facilitate and simplify the description of the present invention and not to indicate or imply that an apparatus or element referred to must have such specific orientations or must be configured or operated in such specific orientations. In addition, terms such as "first" and "second" are used only for the purpose of description and are not to be construed as indicating or implying relative importance. Terms "first position" and "second position" are two different positions.

In the description of the present invention, it is to be noted that unless otherwise expressly specified and limited, the term "mounted", "connected to each other" or "connected" should be construed in a broad sense as securely connected, detachably connected or integrally connected; mechanically connected or electrically connected; directly connected to each other or indirectly connected to each other via an intermediary; or intraconnected between two components. The invention is defined in the appended claims.

## Claims

1. A linear driver for electric furniture, comprising a housing, a worm (12) with one end extending into the housing, a worm wheel (13) disposed in the housing and meshing with the worm (12), and a lead screw (14), wherein the lead screw (14) penetrates through the worm wheel (13) and is in threaded connection with the worm wheel (13), at least one end of the lead screw (14) extends out of the housing, a guide structure (3) is sleeved around the lead screw (14) and in clearance fit with the lead screw (14);
wherein
the guide structure (3) is disposed on at least one end of the worm wheel (13), the guide structure (3) and the worm wheel (13) are integrally formed, the worm wheel (13) is provided with a smooth edge portion (131) at one end of the worm wheel (13) along an axial direction of the worm wheel (13) or is provided with a smooth edge portion (131) at each of two ends of the worm wheel (13) along an axial direction of the worm wheel (13), wherein the smooth edge portion (131) is integrally formed with the worm wheel (13); or
the guide structure (3) is disposed on the housing, the housing comprises a first housing (21) and a second housing (22) connected to each other, the first housing (21) and the second housing (22) are each provided with an arc slot (321), the arc slot (321) on the first housing (21) and the arc slot (321) on the second housing (22) are in one-to-one correspondence with each other and are opened towards each other,
**characterized in that** the smooth edge portion (131) is provided with a guide hole (32), the lead screw (14) penetrates through the guide hole (32) and is in clearance fit with an inner wall of the guide hole (32), and the guide structure (3) comprises the guide hole (32); ir **in that** the arc slots (321) opened towards each other form a guide hole (32), the lead screw (14) penetrates through the guide hole (32) and is in clearance fit with an inner wall of the guide hole (32), and the guide structure (3) comprises the guide hole (32).

2. The linear driver for electric furniture according to claim 1, wherein an inner wall of a hole of the guide structure (3) in clearance fit with the lead screw (14) is provided with a first oil-storage slot.

3. The linear driver for electric furniture according to claim 1 or 2, wherein the worm wheel (13) is provided with a smooth edge portion (131) at one end of the worm wheel (13) along an axial direction of the worm wheel (13) or is provided with a smooth edge portion (131) at each of two ends of the worm wheel (13) along an axial direction of the worm wheel (13), wherein the smooth edge portion (131) is connected to the worm wheel (13), the smooth edge portion (131) is sleeved with a support, the smooth edge portion (131) is configured to rotate relative to the housing through the support, and the support comprises at least one of a bearing (41) or a shaft sleeve (42).

4. The linear driver for electric furniture according to claim 3, wherein an inner wall of the shaft sleeve (42) is provided with a second oil-storage slot, or the shaft sleeve (42) is fixed relative to the housing, and an elastic element (44) is sandwiched between the shaft sleeve (42) and the worm wheel (13).

5. The linear driver for electric furniture according to any one of the preceeding claims, further comprising a brake member (7) connected to the housing and sleeved around the worm (12), the brake member (7) is elastically deformable, the brake member (7) is configured to provide the worm (12) with a braking force opposite to a rotational direction of the worm (12).

6. The linear driver for electric furniture according to any one of the preceeding claims, wherein the housing is provided with a U-shaped portion configured to be connected to a fixing portion of the electric furniture.

7. The linear driver for electric furniture according to any one of the preceeding claims, further comprising a limit assembly configured to limit an extreme position to which the lead screw (14) is movable, wherein the limit assembly comprises:
a first limit member (5) disposed at each of two ends of the lead screw (14) and fixed relative to the lead screw (14); and
a second limit member disposed on the housing and in one-to-one correspondence with the first limit member (5),
wherein of the first limit member (5) and the second limit member corresponding to the first limit member (5), one is a limit switch electrically connected to a power source connected to the worm (12), and the other is configured to cause the limit switch to control the power source to stop operating.

8. The linear driver for electric furniture according to any one of the preceeding claims, wherein a connecting hole for connecting a movable portion of the electric furniture is formed at an end of the lead screw (14), wherein the end penetrates out of the housing; or
a connecting portion fixed relative to the lead screw (14) and configured to connect a movable portion of the electric furniture is connected to an end of the lead screw (14), wherein the end penetrates out of the housing.

9. Electric furniture, comprising the linear driver for electric furniture according to any one of claims 1 to 8.

## Patentansprüche

1. Linearantrieb für elektrische Möbel, umfassend ein Gehäuse, eine Schnecke (12), deren eines Ende sich in das Gehäuse erstreckt, ein im Gehäuse angeordnetes Schneckenrad (13), das mit der Schnecke (12) kämmt, und eine Leitspindel (14), wobei die Leitspindel (14) das Schneckenrad (13) durchdringt und mit dem Schneckenrad (13) in Gewindeverbindung steht, wobei mindestens ein Ende der Leitspindel (14) aus dem Gehäuse herausragt, wobei eine Führungsstruktur (3) um die Leitspindel (14) herum angeordnet ist und mit der Leitspindel (14) in Spielpassung steht;
wobei
die Führungsstruktur (3) an mindestens einem Ende des Schneckenrades (13) angeordnet ist, die Führungsstruktur (3) und das Schneckenrad (13) einstückig ausgebildet sind, das Schneckenrad (13) mit einem glatten Randabschnitt (131) an einem Ende des Schneckenrades (13) entlang einer axialen Richtung des Schneckenrades (13) oder mit einem glatten Randabschnitt (131) an jedem der beiden Enden des Schneckenrades (13) entlang einer axialen Richtung des Schneckenrades (13) versehen ist, wobei der glatte Randabschnitt (131) einstückig mit dem Schneckenrad (13) ausgebildet ist,
oder
die Führungsstruktur (3) an dem Gehäuse angeordnet ist, das Gehäuse ein erstes Gehäuse (21) und ein zweites Gehäuse (22) umfasst, die miteinander verbunden sind, das erste Gehäuse (21) und das zweite Gehäuse (22) jeweils mit einem Bogenschlitz (321) versehen sind, der Bogenschlitz (321) an dem ersten Gehäuse (21) und der Bogenschlitz (321) am zweiten Gehäuse (22) einander eineindeutig zugeordnet und zueinander hin geöffnet sind, **dadurch gekennzeichnet, dass**
der glatte Randabschnitt (131) mit einer Führungsbohrung (32) versehen ist, die Leitspindel (14) durch die Führungsbohrung (32) hindurchragt und in Spielpassung mit einer Innenwand der Führungsbohrung (32) steht, und die Führungsstruktur (3) die Führungsbohrung (32) umfasst; oder dass die zueinander hin geöffneten Bogenschlitze (321) eine Führungsbohrung (32) bilden, die Leitspindel (14) durch die Führungsbohrung (32) hindurchragt und mit einer Innenwand der Führungsbohrung (32) in Spielpassung steht, und die Führungsstruktur (3) die Führungsbohrung (32) umfasst.

2. Linearantrieb für elektrische Möbel nach Anspruch 1, wobei eine Innenwand einer Bohrung der Führungsstruktur (3), die in Spielpassung mit der Leitspindel (14) steht, mit einem ersten Ölspeicherschlitz versehen ist.

3. Linearantrieb für elektrische Möbel nach Anspruch 1 oder 2, wobei das Schneckenrad (13) mit einem glatten Randabschnitt (131) an einem Ende des Schneckenrades (13) entlang einer axialen Richtung des Schneckenrades (13) oder mit einem glatten Randabschnitt (131) an jedem der beiden Enden des Schneckenrades (13) entlang einer axialen Richtung des Schneckenrades (13) versehen ist, wobei der glatte Randabschnitt (131) mit dem Schneckenrad (13) verbunden ist, der glatte Randabschnitt (131) mit einer Stütze ummantelt ist, der glatte Randabschnitt (131) so konfiguriert ist, dass er sich durch die Stütze relativ zum Gehäuse dreht, und die Stütze mindestens eines von einem Lager (41) oder einer Wellenhülse (42) umfasst.

4. Linearantrieb für elektrische Möbel nach Anspruch 3, wobei eine Innenwand der Wellenhülse (42) mit einem zweiten Ölspeicherschlitz versehen ist oder die Wellenhülse (42) relativ zum Gehäuse fixiert ist, und wobei ein elastisches Element (44) zwischen der Wellenhülse (42) und dem Schneckenrad (13) angeordnet ist.

5. Linearantrieb für elektrische Möbel nach einem der vorstehenden Ansprüche, umfassend ferner ein Bremselement (7), das mit dem Gehäuse verbunden ist und die Schnecke (12) umhüllt, wobei das Bremselement (7) elastisch verformbar und dazu konfiguriert ist, eine Bremskraft auf die Schnecke (12) auszuüben, die einer Drehrichtung der Schnecke (12) entgegengesetzt ist.

6. Linearantrieb für elektrische Möbel nach einem der vorstehenden Ansprüche, wobei das Gehäuse mit einem U-förmigen Abschnitt versehen ist, der dazu konfiguriert ist, mit einem Befestigungsabschnitt der elektrischen Möbel verbunden zu werden.

7. Linearantrieb für elektrische Möbel nach einem der vorstehenden Ansprüche, umfassend ferner eine Begrenzungsbaugruppe, die dazu konfiguriert ist, eine Extremposition zu begrenzen, an die die Leitspindel (14) bewegbar ist, wobei die Begrenzungsbaugruppe Folgendes umfasst:
ein erstes Begrenzungselement (5), das an jedem der beiden Enden der Leitspindel (14) angeordnet und relativ zur Leitspindel (14) fixiert ist; und
ein zweites Begrenzungselement, das am Gehäuse angeordnet und dem ersten Begrenzungselement (5) eineindeutig zugeordnet ist,
wobei von dem ersten Begrenzungselement (5) und dem dem ersten Begrenzungselement (5) zugeordneten zweiten Begrenzungselement eines ein Begrenzungsschalter ist, der elektrisch mit einer mit der Schnecke (12) verbundenen Stromquelle verbunden ist, während das andere so konfiguriert ist, dass es den Begrenzungsschalter veranlasst, die Stromquelle so zu steuern, dass sie den Betrieb einstellt.

8. Linearantrieb für elektrische Möbel nach einem der vorstehenden Ansprüche, wobei an einem Ende der Leitspindel (14) eine Verbindungsbohrung zum Verbinden eines beweglichen Abschnitts der elektrischen Möbel ausgebildet ist, wobei das Ende aus dem Gehäuse herausragt; oder
wobei ein relativ zur Leitspindel (14) fixierter und zum Verbinden eines beweglichen Abschnitts der elektrischen Möbel konfigurierter Verbindungsabschnitt mit einem Ende der Leitspindel (14) verbunden ist, wobei das Ende aus dem Gehäuse herausragt.

9. Elektrische Möbel, umfassend den Linearantrieb für elektrische Möbel nach einem der Ansprüche 1 bis 8.

## Revendications

1. Dispositif d'entraînement linéaire pour un meuble électrique, comprenant un boîtier, une vis sans fin (12) dont une extrémité s'étend jusqu'à l'intérieur du boîtier, une roue à vis (13) disposée dans le boîtier et s'engrenant avec la vis sans fin (12), et une vis mère (14), dans lequel la vis mère (14) pénètre à travers la roue à vis (13) et est en liaison filetée avec la roue à vis (13), au moins une extrémité de la vis mère (14) s'étendant hors du boîtier, une structure de guidage (3) est manchonnée autour de la vis mère (14) et en ajustement à jeu avec la vis mère (14) ;
dans lequel
la structure de guidage (3) est disposée sur au moins une extrémité de la roue à vis (13), la structure de guidage (3) et la roue à vis (13) sont disposées de manière intégrale, la roue à vis (13) est pourvue d'une portion de bord lisse (131) à une extrémité de la roue à vis (13) selon une direction axiale de la roue à vis (13) ou est pourvue d'une portion de bord lisse (131) à chacune de deux extrémités de la roue à vis (13) selon une direction axiale de la roue à vis (13), dans lequel la portion de bord lisse (131) est formée de manière intégrale avec la roue à vis (13),
ou
la structure de guidage (3) est disposée sur le boîtier, le boîtier comprend un premier boîtier (21) et un second boîtier (22) reliés l'un à l'autre, le premier boîtier (21) et le second boîtier (22) sont pourvus chacun d'une fente en arc (321), la fente en arc (321) sur le premier boîtier (21) et la fente en arc (321) sur le second boîtier (22) sont en correspondance biunivoque et s'ouvrent l'une vers l'autre, **caractérisé en ce que**
la portion de bord lisse (131) est pourvue d'un trou de guidage (32), la vis mère (14) pénètre à travers le trou de guidage (32) et est en ajustement à jeu avec une paroi interne du trou de guidage (32), et la structure de guidage (3) comprend le trou de guidage (32) ; ou **en ce que** les fentes en arc (321) s'ouvrant l'une vers l'autre forment un trou de guidage (32), la vis mère (14) pénètre à travers le trou de guidage (32) et est en ajustement à jeu avec une paroi interne du trou de guidage (32), et la structure de guidage (3) comprend le trou de guidage (32).

2. Dispositif d'entraînement linéaire pour un meuble électrique selon la revendication 1, dans lequel une paroi interne d'un trou de la structure de guidage (3) en ajustement à jeu avec la vis mère (14) est pourvue d'une première fente de stockage d'huile.

3. Dispositif d'entraînement linéaire pour un meuble électrique selon la revendication 1 ou 2, dans lequel la roue à vis (13) est pourvue d'une portion de bord lisse (131) à une extrémité de la roue à vis (13) selon une direction axiale de la roue à vis (13) ou est pourvue d'une portion de bord lisse (131) à chacune des deux extrémités de la roue à vis (13) selon une direction axiale de la roue à vis (13), dans lequel la portion de bord lisse (131) est reliée à la roue à vis (13), la portion de bord lisse (131) est pourvue par manchonnage d'un support, la portion de bord lisse (131) est configurée pour tourner par rapport au boîtier à travers le support, et le support comprend au moins un d'un roulement (41) ou d'une chemise d'arbre (42).

4. Dispositif d'entraînement linéaire pour un meuble électrique selon la revendication 3, dans lequel une paroi interne de la chemise d'arbre (42) est pourvue d'une seconde fente de stockage d'huile, ou la chemise d'arbre (42) est fixée par rapport au boîtier, et un élément élastique (44) est prise en sandwich entre la chemise d'arbre (42) et la roue à vis (13).

5. Dispositif d'entraînement linéaire pour un meuble électrique selon l'une quelconque des revendications précédentes, comprenant en outre un élément de frein (7) relié au boîtier et manchonné autour de la vis sans fin (12), l'élément de frein (7) est déformable élastiquement, et l'élément de frein (7) est configuré pour fournir à la vis sans fin (12) une force de freinage opposée à une direction de rotation de la vis sans fin (12).

6. Dispositif d'entraînement linéaire pour un meuble électrique selon l'une quelconque des revendications précédentes, dans lequel le boîtier est pourvu d'une portion en forme U configurée pour être reliée à une portion de fixation du meuble électrique.

7. Dispositif d'entraînement linéaire pour un meuble électrique selon l'une quelconque des revendications précédentes, comprenant en outre un ensemble de limitation configuré pour limiter une position extrême jusqu'à laquelle la vis mère (14) peut se déplacer, dans lequel l'ensemble de limitation comprend :
un premier élément de limitation (5) disposé à chacune de deux extrémités de la vis mère (14) et fixé par rapport à la vis mère (14) ; et
un second élément de limitation disposé sur le boîtier et en correspondance biunivoque avec le premier élément de limitation (5),
dans lequel parmi le premier élément de limitation (5) et le second élément de limitation correspondant au premier élément de limitation (5), l'un est un commutateur de limitation connecté électriquement à une source d'alimentation connectée à la vis sans fin (12), et l'autre est configuré pour amener le commutateur de limitation à commander la source d'alimentation à s'arrêter de fonctionner.

8. Dispositif d'entraînement linéaire pour un meuble électrique selon l'une quelconque des revendications précédentes, dans lequel un trou de liaison pour relier une portion mobile du mobilier électrique est formé à une extrémité de vis mère (14), dans lequel l'extrémité pénètre hors du boîtier ; ou
une portion de liaison fixée par rapport à la vis mère (14) et configurée pour relier une portion mobile du mobilier électrique est reliée à une extrémité de la vis mère (14), dans lequel l'extrémité pénètre hors du boîtier.

9. Meuble électrique, comprenant le dispositif d'entraînement linéaire pour un meuble électrique selon l'une quelconque des revendications 1 à 8.
